(19) Europäisches Patentamt / European Patent Office / Office européen des brevets

(11) **EP 2 832 223 A1**

(12) **EUROPEAN PATENT APPLICATION**
published in accordance with Art. 153(4) EPC

(43) Date of publication:
**04.02.2015 Bulletin 2015/06**

(51) Int Cl.:
*A01N 47/36* (2006.01)    *A01N 41/10* (2006.01)
*A01N 43/10* (2006.01)    *A01N 43/40* (2006.01)
*A01N 43/70* (2006.01)    *A01N 43/80* (2006.01)
*A01N 43/824* (2006.01)   *A01P 13/00* (2006.01)

(21) Application number: 13769011.1

(22) Date of filing: **29.03.2013**

(86) International application number:
**PCT/JP2013/059673**

(87) International publication number:
**WO 2013/147225 (03.10.2013 Gazette 2013/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.03.2012 JP 2012079935**

(71) Applicant: Ishihara Sangyo Kaisha, Ltd.
**Osaka-shi, Osaka 550-0002 (JP)**

(72) Inventors:
• **YAMADA, Ryu**
 **Kusatsu-shi**
 **Shiga 525-0025 (JP)**

• **OKAMOTO, Hiroyuki**
 **Kusatsu-shi**
 **Shiga 525-0025 (JP)**
• **TERADA, Takashi**
 **Kusatsu-shi**
 **Shiga 525-0025 (JP)**

(74) Representative: **Müller-Boré & Partner
Patentanwälte PartG mbB
Friedenheimer Brücke 21
80639 München (DE)**

(54) **HERBICIDAL COMPOSITION**

(57) To provide a high active herbicidal composition having a broad herbicidal spectrum.

A herbicidal composition comprising, as active ingredients, (a) nicosulfuron or its salt, (b) terbuthylazine or its salt and (c) compound C (compound C is at least one herbicidal compound selected from the group consisting of group C1 and group C2 or its salt; Group C1 is at least one 4-hydroxyphenylpyruvate dioxygenase inhibitor selected from the group consisting of sulcotrione, bicyclopyrone, mesotrione, topramezone and their salts; and group C2 is at least one very long chain fatty acid biosynthesis inhibitor selected from the group consisting of dimethenamid-P, flufenacet and their salts).

**Description**

TECHNICAL FIELD

The present invention relates to a herbicidal composition comprising (a) nicosulfuron or its salt (hereinafter referred to as compound A), (b) terbuthylazine or its salt (hereinafter referred to as compound B) and (c) compound C (compound C is at least one compound selected from the group consisting of group C1 and group C2 or its salt; Group C1 is at least one 4-hydroxyphenylpyruvate dioxygenase inhibitor (hereinafter sometimes referred to as a 4-HPPD inhibitor) selected from the group consisting of sulcotrione, bicyclopyrone, mesotrione, topramezone and their salts, and group C2 is at least one very long chain fatty acid biosynthesis inhibitor selected from the group consisting of dimethenamid-P, flufenacet and their salts).

BACKGROUND ART

Patent Document 1 discloses a combination of herbicidally active ingredients comprising compound A and compound B.
Further, Patent Document 2 discloses a combination of herbicidally active ingredients comprising a specific compound group containing topramezone, compound A and a photosynthesis inhibitor.
However, Patent Documents 1 and 2 failed to disclose a specific combination of compound A, compound B and compound C which are herbicidally active ingredients of the present invention, and failed to specifically disclose remarkable synergistic effects by a combination of them.

PRIOR ART DOCUMENTS

PATENT DOCUMENTS

Patent Document 1: WO2007/037152
Patent Document 2: WO2004/008849

DISCLOSURE OF INVENTION

TECHNICAL PROBLEM

At present, many herbicidal compositions have been developed and used, but there are a variety of types of undesired plants represented by weeds to be controlled. Further, undesired plants having lowered sensitivity to herbicides (herbicide-resistant weeds) emerged, and in some applications, practically, herbicides have only insufficient effects.
The object of the present invention is to provide a high active herbicidal composition having a broader herbicidal spectrum, and a method for controlling undesired plants or inhibiting their growth using the herbicidal composition.

SOLUTION TO PROBLEM

The present inventors have conducted extensive studies to solve the above problems and as a result, found that unexpectedly excellent herbicidal effects can be obtained by combination of specific compound A, compound B and compound C which are herbicidally active ingredients in the present invention, as compared with a case where the respective compounds are applied individually, or two of them are applied in combination (for example, compound A and compound B are used in combination). The present invention was made on the basis of such discoveries.
That is, the present invention provides the following.

[1] A herbicidal composition comprising, as active ingredients, (a) nicosulfuron or its salt, (b) terbuthylazine or its salt and (c) compound C (compound C is at least one herbicidal compound selected from the group consisting of group C1 and group C2 or its salt; Group C1 is at least one 4-hydroxyphenylpyruvate dioxygenase inhibitor selected from the group consisting of sulcotrione, bicyclopyrone, mesotrione, topramezone and their salts; and group C2 is at least one very long chain fatty acid biosynthesis inhibitor selected from the group consisting of dimethenamid-P, flufenacet and their salts).
[2] The herbicidal composition according to the above [1], wherein the mixing ratio of (a) to (b) is from 1:0.5 to 1:800 by the weight ratio, and the mixing ratio of (a) to (c) is from 1:0.03 to 1:800 by the weight ratio.

[3] The herbicidal composition according to the above [1], wherein (c) is at least one 4-hydroxyphenylpyruvate dioxygenase inhibitor selected from the group consisting of sulcotrione, bicyclopyrone, mesotrione, topramezone and their salts.

[4] The herbicidal composition according to the above [1], wherein (c) is at least one very long chain fatty acid biosynthesis inhibitor selected from the group consisting of dimethenamid-P, flufenacet and their salts.

[5] The herbicidal composition according to the above [1], wherein (c) is at least one member selected from the group consisting of sulcotrione, bicyclopyrone, topramezone, dimethenamid-P and their salts.

[6] The herbicidal composition according to the above [1], wherein (c) is at least one member selected from the group consisting of sulcotrione, bicyclopyrone, dimethenamid-P and their salts.

[7] A method for controlling undesired plants or inhibiting their growth, which comprises applying a herbicidally effective amount of the herbicidal composition as defined in the above [1] to the undesired plants or to a place where they grow.

[8] A method for controlling undesired plants or inhibiting their growth, which comprises applying a herbicidally effective amount of (a) nicosulfuron or its salt, a herbicidally effective amount of (b) terbuthylazine or its salt, and a herbicidally effective amount of (c) compound C (compound C is at least one herbicidal compound selected from the group consisting of group C1 and group C2 or its salt; Group C1 is at least one 4-hydroxyphenylpyruvate dioxygenase inhibitor selected from the group consisting of sulcotrione, bicyclopyrone, mesotrione, topramezone and their salts; and group C2 is at least one very long chain fatty acid biosynthesis inhibitor selected from the group consisting of dimethenamid-P, flufenacet and their salts), to the undesired plants or to a place where they grow.

[9] The method according to the above [8], wherein (a) is applied in an amount of from 5 to 150 g/ha, (b) is applied in an amount of from 100 to 4,000 g/ha, and (c) is applied in an amount of from 5 to 4,000 g/ha.

[10] The method according to the above [8], wherein (a) is applied in an amount of from 10 to 100 g/ha, (b) is applied in an amount of from 200 to 2,000 g/ha, and (c) is applied in an amount of from 10 to 2,000 g/ha.

[11] The method according to the above [8], wherein the undesired plants are weeds having lowered sensitivity to herbicidal compounds.

ADVANTAGEOUS EFFECTS OF INVENTION

The herbicidal composition of the present invention is capable of controlling a wide range of undesired plants emerging in agricultural fields or non-agricultural fields. It represents a synergistic effect i.e. a herbicidal effect higher than the mere addition of the respective herbicidal effects of the active ingredients.

Further, the herbicidal composition of the present invention can be applied at a low dose as compared with a case where the respective active ingredients are applied individually. Thus, it is effective to reduce the environmental load on an area where the composition is applied or a surrounding area thereof.

In the present invention, a synergistic effect means a higher herbicidal activity of three active ingredients combined, than the simple sum of the respective herbicidal activities of the three active ingredients (the expected activity). The activity expected by the combination of three active ingredients can be calculated as follows (Colby S.R., "Weed", vol. 15, p. 20-22, 1967).

$$E = (\alpha+\beta+\gamma) - (\alpha\beta+\alpha\gamma+\beta\gamma)/100+(\alpha\beta\gamma)/10{,}000$$

where

$\alpha$: growth inhibition rate when treated with x (g/ha) of herbicide X,
$\beta$: growth inhibition rate when treated with y (g/ha) of herbicide Y,
$\gamma$: growth inhibition rate when treated with z (g/ha) of herbicide Z,
E: growth inhibition rate expected when treated with x (g/ha) of herbicide X, y (g/ha) of herbicide Y and z (g/ha) of herbicide Z.

That is, when the actual growth inhibition rate (measured value) is higher than the growth inhibition rate by the above calculation (calculated value), the activity by the combination can be regarded as showing a synergistic effect.

The herbicidal composition of the present invention shows a synergistic effect when calculated by the above formula.

DESCRIPTION OF EMBODIMENTS

As for compound A, nicosulfuron (common name) is 2-(4,6-dimethoxypyrimidin-2-ylcarbamoylsulfamoyl)-N,N-dimethylnicotinamide.

As for compound B, terbuthylazine (common name) is $N^2$-tert-butyl-6-chloro-$N^4$-ethyl-1,3,5-triazine-2,4-diamine.

Compounds in group C1 and compounds in group C2 for compound C are as follows.

In group C1, mesotrione (common name) is 2-(4-mesyl-2-nitrobenzoyl)cyclohexane-1,3-dione, sulcotrione (common name) is 2-(2-chloro-4-mesylbenzoyl)cyclohexane-1,3-dione, bicyclopyrone (common name) is 4-hydroxy-3-{2-[(2-methoxyethoxy)methyl]-6-(trifluoromethyl)-3-pyridylcarbonyl}bicyclo[3.2.1]oct-3-en-2-one and topramezone (common name) is [3-(4,5-dihydro-1,2-oxazol-3-yl)-4-mesyl-o-tolyl](5-hydroxy-1-methylpyrazol-4-yl)methanone.

Further, in group C2, dimethenamid-P (common name) is (S)-2-chloro-N-(2,4-dimethyl-3-thienyl)-N-(2-methoxy-1-methylethyl)acetamide, and flufenacet (common name) is 4'-fluoro-N-isopropyl-2-[5-(trifluoromethyl)-1,3,4-thidiazol-2-yloxy]acetanilide.

The salt included in compound A, compound B and compound C may be any salt so long as it is agriculturally acceptable. Examples thereof include alkali metal salts such as a sodium salt and a potassium salt; alkaline earth metal salts such as a magnesium salt and a calcium salt; ammonium salts such as a monomethylammonium salt, a dimethylammonium salt and a triethylammonium salt; inorganic acid salts such as a hydrochloride, a perchlorate, a sulfate and a nitrate, and organic acid salts such as an acetate and a methanesulfonate.

The mixing ratio of the respective compounds in the present invention cannot generally be defined, as it varies depending upon various conditions such as the type of the formulation, the weather conditions, and the type and the growth stage of the undesired plants, and the mixing ratio of compound A to compound B is, for example, from 1:0.5 to 1:800, preferably from 1:2 to 1:200 by the weight ratio, and the mixing ratio of compound A to compound C is, for example, from 1:0.03 to 1:800, preferably from 1:0.1 to 1:200 by the weight ratio.

In a case where compound C is sulcotrione, the mixing ratio of compound A to compound C is, for example, from 1:0.1 to 1:400, preferably from 1:0.5 to 1:200 by the weight ratio.

A particularly excellent effect (for example a synergistic effect) is obtainable by further mixing sulcotrione with a combination of compound A and compound B in a mixing ratio of compound A to sulcotrione of the above from 1:0.5 to 1:200, as compared with another mixing ratio.

In a case where compound C is bicyclopyrone, the mixing ratio of compound A to compound C is, for example, from 1:0.1 to 1:100, preferably from 1:0.25 to 1:40 by the weight ratio.

A particularly excellent effect (for example a synergistic effect) is obtainable by further mixing bicyclopyrone with a combination of compound A and compound B in a mixing ratio of compound A to bicyclopyrone of the above from 1:0.25 to 1:40, as compared with another mixing ratio.

In a case where compound C is mesotrione, the mixing ratio of compound A to compound C is, for example, from 1:0.1 to 1:100, preferably from 1:0.25 to 1:12 by the weight ratio.

A particularly excellent effect (for example a synergistic effect) is obtainable by further mixing mesotrione with a combination of compound A and compound B in a mixing ratio of compound A to mesotrione of the above from 1:0.25 to 1:12, as compared with another mixing ratio.

In a case where compound C is topramezone, the mixing ratio of compound A to compound C is, for example, from 1:0.03 to 1:30, preferably from 1:0.1 to 1:10 by the weight ratio.

A particularly excellent effect (for example a synergistic effect) is obtainable by further mixing topramezone with a combination of compound A and compound B in a mixing ratio of compound A to topramezone of the above from 1:0.1 to 1:10, as compared with another mixing ratio.

In a case where compound C is dimethenamid-P, the mixing ratio of compound A to compound C is, for example, from 1:1 to 1:400, preferably from 1:2 to 1:200 by the weight ratio.

A particularly excellent effect (for example a synergistic effect) is obtainable by further mixing dimethenamid-P with a combination of compound A and compound B in a mixing ratio of compound A to dimethenamid-P of the above from 1:2 to 1:200, as compared with another mixing ratio.

In a case where compound C is flufenacet, the mixing ratio of compound A to compound B is, for example, from 1:3 to 1:50 by the weight ratio. Further, the mixing ratio of compound A to compound C is, for example, from 1:3 to 1:30 by the weight ratio.

A particularly excellent effect (for example a synergistic effect) is obtainable by further mixing flufenacet with a combination of compound A and compound B in a mixing ratio of compound A to flufenacet of the above from 1:3 to 1:30, as compared with another mixing ratio.

The herbicidally effective amounts of compounds A, B and C cannot generally be defined, as they vary depending upon various conditions such as the mixing ratio of the respective compounds, the type of the formulation, the weather conditions, and the type and the growth stage of the undesired plants. However, for example, compound A is applied in an amount of from 5 to 150 g/ha, preferably from 10 to 100 g/ha, compound B is applied in an amount of from 100 to 4,000 g/ha, preferably from 200 to 2,000 g/ha, and compound C is applied in an amount of from 5 to 4,000 g/ha, preferably from 10 to 2,000 g/ha.

In a case where compound C is sulcotrione, compound C is applied in an amount of from 20 to 2,000 g/ha, preferably from 50 to 2,000 g/ha.

In a case where compound C is bicyclopyrone, compound C is applied in an amount of from 10 to 500 g/ha, preferably from 25 to 400 g/ha.

In a case where compound C is mesotrione, compound C is applied in an amount of from 10 to 500 g/ha, preferably from 25 to 120 g/ha.

In a case where compound C is topramezone, compound C is applied in an amount of from 5 to 150 g/ha, preferably from 10 to 100 g/ha.

In a case where compound C is dimethenamid-P, compound C is applied in an amount of from 150 to 2,000 g/ha, preferably from 200 to 2,000 g/ha.

In a case where compound C is flufenacet, compound A is applied in an amount of from 10 to 60 g/ha, compound B is applied in an amount of from 200 to 500 g/ha, and compound C is applied in an amount of from 200 to 300 g/ha.

The herbicidal composition of the present invention may be applied to undesired plants or may be applied to a place where they grow. Further, it may be applied at any time either before or after the emergence of the undesired plants. Further, the herbicidal composition of the present invention may take various application forms such as soil application, foliar application, irrigation application, and submerged application.

Further, it can be applied to agricultural fields such as upland fields, orchards and paddy fields, and non-cropland such as ridges of fields, fallow fields, play grounds, golf courses, vacant lands, forests, factory sites, railway sides and roadsides.

The herbicidal composition of the present invention can control a wide range of undesired plants such as annual weeds and perennial weeds. The undesired plants to be controlled by the herbicidal composition of the present invention may, for example, be specifically cyperaceae such as sedge (Cyperus spp.) (such as purple nutsedge (Cyperus rotundus L.), smallflower umbrella sedge (Cyperus difformis L.), yellow nutsedge (Cyperus esculentus L.) or amur cyperus (Cyperus microiria Steud.)) or spikesedge (Kyllinga spp.) (such as green kyllinga (Kyllinga brevifolia Rottb. var. leiolepis)); gramineae such as barnyard grass (Echinochloa spp.) (such as barnyardgrass (Echinochloa crus-galli L.), early watergrass (Echinochloa oryzicola vasing.) or Japanese millet (Echinochloa utilis Ohwi et Yabuno)), crabgrass (Digitaria spp.) (such as summergrass (Digitaria ciliaris (Retz.) Koel), large crabgrass (Digitaria sanguinalis L.), violet crabgrass (Digitaria violascens Link) or Jamaican crabgrass (Digitaria horizontalis Wilid.)), goosegrass (Eleusine spp.) (such as goosegrass (Eleusine indica L.)), italian ryegrass (Lolium spp.) (such as ryegrass (Lolium multiflorum Lam.)), foxtail (Setaria spp.) (such as green foxtail (Setaria viridis L.)), sorghum (Sorghum spp.) (such as johnsongrass (Sorghum halepense (L.) Pers.) or shattercane (Sorghum bicolor (L.) Moench.)), oat (Avena spp.) (such as wild oat (Avena fatua L.)), brome (Bromus spp.) (such as drooping brome (Bromus tectorum L.) or japanese brome (Bromus japonicus Thunb.)),meadowgrass (Poa spp.) (such as annual bluegrass (Poa annua L.)), foxtail grass (Alopecurus spp.) (such as blackgrass (Alopecurus myosuroides Huds.) or shortawn foxtail (Alopecurus aegualis Sobol. var. amurensis)), bermudagrass (Cynodon dactylon (L.) Pers.), panic grass (Panicum spp.) (such as guinea grass (Panicum maximum Jacq.) or fall panicum (Panicum dichotomiflorum (L.) Michx.)), signal grass (Brachiaria spp.) (such as plantain signal grass (Brachiaria plantaginea (LINK) Hitchc.), palisade signal grass (Brachiaria decumbens Stapf) or mauritius signal grass (Brachiaria mutica (Forssk.) Stapf)), paspalum (Paspalum spp.) (such as dallisgrass (Paspalum dilatatum Poir.) or vasey's grass (Paspalum urvillei Steud.)), itchgrass (Rottboellia spp.) (such as itchgrass (Rottboellia cochinchinensis (LOUR.) W.D.CLAYTON)), or sandbur (Cenchrus spp.) (such as southern sandbur (Cenchrus echinatus L.)); scrophulariaceae such as persian speedwell (Veronica persica Poir.) or corn speedwell (Veronica arvensis L.); compositae such as beggar ticks (Bidens spp.) (such as hairy beggarticks (Bidens pilosa L.), devils berggarticks (Bidens frondosa L.), Bidens biternata (Lour.) Merr. et Sherff or beggarticks (Bidens subalternans DC.)), hairy fleabane (Conyza bonariensis (L.) Cronq.)), horseweed (Erigeron canadensis L.), dandelion (Taraxacum officinale Weber), horseweed (Conyza spp.) (such as canadian horseweed (Conyza canadensis (L.) Cronquist)), cocklebur (Xanthium spp.) (such as common cocklebur (Xanthium strumarium L.)), ragweed (Ambrosia spp.) (such as annual ragweed (Ambrosia artemisiifolia L.)) or ragwort (Senecio spp.) (such as old-man-in-the-spring (Senecio vulgaris L.)); leguminosae such as rattlepod or rattlebox (Crotalaria spp.) (such as sunnhemp (Crotalaria juncea L.)), poison bean (Sesbania spp.) (such as rostrate sesbania (Sesbania rostrata Bremek. & Oberm.) or sesbania pea (Sesbania cannabina (Retz.) Pers.)), korean lespedeza (Kummerowia stipulacea (Maxim.) Makino) or white clover (Trifolium repens L.)); caryophyllaceae such as sticky chickweed (Cerastium glomeratum Thuill.) or starwort (Stellaria spp.) (such as common chickweed (Stellaria media L.)); euphorbiaceae such as garden spurge (Euphorbia hirta L.), threeseeded copperleaf (Acalypha australis L.) or fireplant (Euphorbia heterophylla L.); plantaginaceae such as asiatic plantain (Plantago asiatica L.); oxalidaceae such as creeping woodsorrel (Oxalis corniculata L.); apiaceae such as lawn pennywort (Hydrocotyle sibthorpioides Lam.); violaceae such as violet (Viola mandshurica W. Becker); iridaceae such as blue-eyedgrass (Sisyrinchium rosulatum Bicknell); geraniaceae such as carolina geranium (Geranium carolinianum L.); labiatae such as purple deadnettle (Lamium purpureum L.) or henbit (Lamium amplexicaule L.); malvaceae such as velvetleaf (Abutilon theophrasti MEDIC.) or prickly sida (Sida spinosa L.); convolvulaceae such as ivy-leaved morningglory (Ipomoea hederacea (L.) Jacq.), common morningglory (Ipomoea purpurea ROTH), cypressvine morningglory (Ipomoea quamoclit L.), Ipomoea grandifolia (DAMMERMANN) O'DONNELL, hairy merremia (Merremia aegyptia (L.) URBAN) or field bindweed (Convolvulus arvensis L.); chenopodiaceae such as goosefoot (Chenopodium spp.) (such as common lambsquarters (Chenopodium album L.)); portulacaceae such as common purslane (Portulaca oleracea L.); amaranthaceae such as pigweed (Amaranthus spp.) (such as prostrate pigweed (Amaranthus blitoides S. Wats.), livid amaranth (Amaranthus lividus L.), purple amaranth (Amaranthus blitum L.), smooth pigweed (Amaranthus hybridus L., Amaranthus patulus Bertol.), powell amaranth (Amaranthus powellii S.Wats.), slender amaranth (Amaranthus viridis L.), palmer amaranth (Amaranthus palmeri S.Wats.), redroot pigweed (Amaranthus retroflexus L.), tall waterhemp (Amaranthus tuberculatus (Moq.) Sauer.), common waterhemp (Amaranthus tamariscinus Nutt.), thorny amaranth (Amaranthus spinosus L.)), ataco (Amaranthus quitensis Kunth.) or roughfruit amaranth (Amaranthus rudis Sauer.)); solanaceae such as nightshade (Solanum spp.) (such as black nightshade (Solanum nigrum L.)); polygonaceae such as knotweed (Polygonum spp.) (such as spotted knotweed (Polygonum lapathifolium L.) or green smartweed (Polygonum scabrum MOENCH)); cruciferae such as flexuous bittercress (Cardamine flexuosa WITH.), or mustard (Sinapis spp.) (such as Charlock (Sinapis arvensis L.)); cucurbitaceae such as burcucumber (Sicyos angulatus L.); commelinaceae such as common dayflower (Commelina communis L.); rosaceae such as mock strawberry (Duchesnea chrysantha (Zoll. et Mor.) Miq.); molluginacea such as carpetweed (Mollugo verticillata L.); or rubiaceae such as false cleavers (Galium spurium var. echinospermon (Wallr.)Hayek) or stickywilly (Galium aparine L.).

The herbicidal composition of the present invention is very useful, for example, in the following practical application cases.

(1) It has a remarkable synergistic effect, and has a favorable herbicidal activity even if the doses of the respective compounds A, B and C are small, and accordingly the impact on the surrounding environment can be suppressed.
(2) A herbicidal composition having a long lasting herbicidal effect i.e. a long lasting residual activity, as compared with a case where compound A, B and C are applied individually or two of them are applied in combination (for example, compound A and C are used in combination), may be provided in some cases.
(3) It can control annual and perennial gramineae such as Echinochloa spp., Digitaria spp., Setaria spp., Poa spp., Avena spp., Agropyron spp., Alopecurus spp., Eleusine spp., Rottboellia spp., Sorghum spp. and Panicum spp., which are problematic as noxious weeds in agricultural fields, particularly corn fields.
(4) It has a high herbicidal activity also against weeds in late leaf stage, such as weeds in 5-leaf stage to heading stage, and particularly remarkable for gramineae.
(5) It has a favorable herbicidal activity against gramineae and broad leaf weeds either by foliar application or soil application.
(6) It has a high herbicidal activity against weeds having lowered sensitivity to ALS (acetolactate synthase) inhibitors, such as cyperaceae, amaranthaceae, compositae, cruciferae, caryophyllaceae, and gramineae.
(7) It has a high herbicidal activity against weeds having lowered sensitivity to PSII (photosystem II) inhibitors, such as gramineae, chenopodiaceae, amaranthaceae, solanaceae, malvaceae, compositae, and polygonaceae.
(8) It has a high herbicidal activity against weeds having lowered sensitivity to 4-HPPD inhibitors, such as amaranthaceae.

In consideration of the application site of the herbicidal composition or the type or growth state of the undesired plants, the herbicidal composition of the present invention may be mixed with or may be used in combination with other herbicides, fungicides, antibiotics, plant hormones, insecticides, fertilizers, phytotoxicity-reducing agents, etc., in addition to the above active ingredients, without departing from the intention and the scope of the present invention, whereby more excellent effects and activities may sometimes be obtained.

Such other herbicides may, for example, be (1) those which are believed to exhibit herbicidal effects by disturbing hormone activities of plants, (2) those which are believed to exhibit herbicidal effects by inhibiting photosynthesis of plants, (3) those which are believed to be converted to free radicals by themselves to form active oxygen in the plant body and shows rapid herbicidal efficacy, (4) those which are believed to exhibit herbicidal effects by inhibiting chlorophyll biosynthesis of plants and abnormally accumulating a photosensitizing peroxide substance in the plant body, (5) those which are believed to exhibit herbicidal effects characterized by bleaching activities by inhibiting chromogenesis of plants such as carotenoids, (6) those which exhibit strong herbicidal effects specifically to gramineous plants, (7) those which are believed to exhibit herbicidal effects by inhibiting an amino acid biosynthesis of plants, (8) those which are believed to exhibit herbicidal effects by inhibiting cell mitoses of plants, (9) those which are believed to exhibit herbicidal effects by inhibiting protein biosynthesis or lipid biosynthesis of plants, (10) those which are believed to exhibit herbicidal effects by being parasitic on plants.

The herbicidal composition of the present invention may be prepared by mixing compound A, compound B and compound C, as active ingredients, with various agricultural additives in accordance with conventional formulation methods for agricultural chemicals, and applied in various formulations such as dusts, granules, water dispersible granules, wettable powders, tablets, pills, capsules (including a formulation packaged by a water soluble film), water-based suspensions, oil-based suspensions, microemulsions, suspoemulsions, water soluble powders, emulsifiable concentrates, soluble concentrates or pastes. It may be formed into any formulation which is commonly used in this field, so long as the object of the present invention is thereby met.

At the time of the formulation, compound A, compound B and compound C may be mixed together for the formulation, or they may be separately formulated.

The additives to be used for the formulation include, for example, a solid carrier such as kaolinite, sericite, diatomaceous earth, slaked lime, calcium carbonate, talc, white carbon, kaoline, bentonite, clay, sodium carbonate, sodium bicarbonate, mirabilite, zeolite or starch; a solvent such as water, toluene, xylene, solvent naphtha, dioxane, dimethylsulfoxide, N,N-dimethylformamide, dimethylacetamide, N-methyl-2-pyrrolidone or an alcohol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenylether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or a salt of alkylnaphthalene sulfonic acid condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins; and transesterified vegetable oil such as methylated rapeseed oil or ethylated rapeseed oil. These additives may suitably be selected for use alone or in combination as a mixture of two or more of them, so long as the object of the present invention is met. Further, additives other than the above-mentioned may be suitably selected for use among those known in this field. For example, various additives commonly used, such as a filler, a thickener, an anti-settling agent, an anti-freezing agent, a dispersion stabilizer, a safener, an anti-mold agent, a bubble agent, a disintegrator and a binder, may be used. The mix ratio by weight of the active ingredients to such various additives in the herbicidal composition of the present invention may be from 0.001:99.999 to 95:5, preferably from 0.005:99.995 to 90:10.

As a method of applying the herbicidal composition of the present invention, a proper method can be employed among various methods depending upon various conditions such as the application site, the type of the formulation, and the type and the growth stage of the undesired plants to be controlled, and for example, the following methods may be mentioned.

(1) Compound A, compound B and compound C are separately formulated, and the formulations are applied to plants to be controlled as they are, or they are diluted to predetermined concentrations with e.g. water as the case requires, and as the case requires, a spreader (such as a surfactant, a vegetable oil or a mineral oil) is added for application.

(2-1) Compound A and compound B are formulated together, and compound C is formulated, and the formulations are applied to plants to be controlled as they are or diluted to predetermined concentrations with e.g. water, and as the case requires, a spreader (such as a surfactant, a vegetable oil or a mineral oil) is added for application.

(2-2) Compound A and compound C are formulated together, and compound B is formulated, and the formulations are applied to plants to be controlled as they are or diluted to predetermined concentrations with e.g. water, and as the case requires, a spreader (such as a surfactant, a vegetable oil or a mineral oil) is added for application.

(2-3) Compound B and compound C are formulated together, and compound A is formulated, and the formulations are applied to plants to be controlled as they are or diluted to predetermined concentrations with e.g. water, and as the case requires, a spreader (such as a surfactant, a vegetable oil or a mineral oil) is added for application.

(3) Compound A, compound B and compound C are formulated together, and the formulation is applied to plants to be controlled as it is or diluted to a predetermined concentration with e.g. water, and as the case requires, a spreader (such as a surfactant, a vegetable oil or a mineral oil) is added for application.

In the above application methods (1) and (2-1) to (2-3), the respective formulations may be mixed when diluted to a predetermined concentration with e.g. water so that they are applied to plants to be controlled simultaneously, or they may be applied continuously or with an appropriate interval. In order to obtain effects of the present invention more effectively, it is preferred to apply compound A, compound B and compound C simultaneously.

Preferred embodiments of the present invention will be described below, but the present invention is by no means restricted thereto.

(1) A herbicidal composition comprising, as active ingredients, (a) nicosulfuron or its salt, (b) terbuthylazine or its salt and (c) compound C (compound C is at least one herbicidal compound selected from the group consisting of group C1 and group C2 or its salt; group C1 is at least one 4-HPPD inhibitor selected from the group consisting of sulcotrione, bicyclopyrone, mesotrione, topramezone and their salts; and group C2 is at least one very long chain fatty acid biosynthesis inhibitor selected from the group consisting of dimethenamid-P, flufenacet and their salts).

(2) The herbicidal composition according to (1), wherein (c) is at least one herbicidal compound selected from group C1.

(3) The herbicidal composition according to (2), wherein (c) is at least one herbicidal compound selected from the group consisting of sulcotrione, bicyclopyrone, mesotrione and their salts.

(4) The herbicidal composition according to (1), wherein (c) is at least one herbicidal compound selected from group C2.

(5) The composition according to any one of (1) to (4), which contains (a), (b) and (c) in amounts to show a herbicidally synergistic effect (synergistic herbicidally effective amount).

(6) The composition according to any one of (1) to (4), wherein the weight ratio of (a) to (b) is within a range of from 1:0.5 to 1:800, and the weight ratio of (a) to (c) is within a range of from 1:0.03 to 1:800.

(7) The composition according to any one of (1) to (4), wherein the weight ratio of (a) to (b) is within a range of from 1:2 to 1:200, and the weight ratio of (a) to (c) is within a range of from 1:0.1 to 1:200.

(8) A method for controlling undesired plants or inhibiting their growth, which comprises applying a herbicidally effective amount of the herbicidal composition as defined in (1) to the undesired plants or to a place where they grow.

(9) A method for controlling undesired plants or inhibiting their growth, which comprises applying a herbicidally effective amount of the above (a), a herbicidally effective amount of the above (b) and a herbicidally effective amount of the above (c) to the undesired plants or to a place where they grow.

(10) The method according to (8) or (9), wherein the undesired plants are weeds having lowered sensitivity to herbicidal compounds.

(11) The method according to (8) or (9), wherein the undesired plants are weeds having lowered sensitivity to ALS inhibitors.

(12) The method according to (11), wherein the weeds having lowered sensitivity to ALS inhibitors are gramineae, amaranthaceae, cruciferae, compositae, caryophyllaceae or cyperaceae.

(13) The method according to (12), wherein the gramineae is Echinochloa spp., Eleusine spp., Lolium spp., Setaria spp., Sorghum spp., Avena spp., Bromus spp., Poa spp. or Alopecurus spp.

(14) The method according to (12), wherein the amaranthaceae is Amaranthus spp.

(15) The method according to (12), wherein the cruciferae is Sinapis spp.

(16) The method according to (12), wherein the compositae is Conyza spp. or Xanthium spp.

(17) The method according to (12), wherein the caryophyllaceae is Stellaria spp.

(18) The method according to (12), wherein the cyperaceae is Cyperus spp.

(19) The method according to (8) or (9), wherein the undesired plants are weeds having lowered sensitivity to PSII inhibitors.

(20) The method according to (19), wherein the weeds having lowered sensitivity to PSII inhibitors are gramineae, chenopodiaceae, amaranthaceae, solanaceae, malvaceae, compositae or polygonaceae.

(21) The method according to (20), wherein the gramineae is Echinochloa spp., Digitaria spp., Setaria spp. or Poa spp.

(22) The method according to (20), wherein the chenopodiaceae is Chenopodium spp.

(23) The method according to (20), wherein the amaranthaceae is Amaranthus spp.

(24) The method according to (20), wherein the solanaceae is Solanum spp.

(25) The method according to (20), wherein the malvaceae is Abutilon spp.

(26) The method according to (20), wherein the compositae is Ambrosia spp., Senecio spp. or Conyza spp.

(27) The method according to (20), wherein the polygonaceae is Polygonum spp.

(28) The method according to (8) or (9), wherein the undesired plants are weeds having lowered sensitivity to 4-HPPD inhibitors.

(29) The method according to (28), wherein the weeds having lowered sensitivity to 4-HPPD inhibitors are amaranthaceae.

(30) The method according to (29), wherein the amaranthaceae is Amaranthus spp.

(31) The method according to (8) or (9), which comprises applying (a) in an amount to show a herbicidally synergistic effect (synergistic herbicidally effective amount), (b) in an amount to show a herbicidally synergistic effect (synergistic herbicidally effective amount) and (c) in an amount to show a herbicidally synergistic effect (synergistic herbicidally effective amount).

(32) The method according to (8) or (9), wherein (a) is applied in an amount of from 5 to 150 g/ha, (b) is applied in an amount of from 100 to 4,000 g/ha, and (c) is applied in an amount of from 5 to 4,000 g/ha.

(33) The method according to (8) or (9), wherein (a) is applied in an amount of from 10 to 100 g/ha, (b) is applied in an amount of from 200 to 2,000 g/ha, and (c) is applied in an amount of from 10 to 2,000 g/ha.

(34) The herbicidal composition according to (1), wherein (c) is at least one herbicidal compound selected from the group consisting of sulcotrione, dimethenamid-P and their slats.

(35) The herbicidal composition according to (1), wherein (c) is sulcotrione or its salt, the weight ratio of (a) to (b) is from 1:2 to 1:200, and the weight ratio of (a) to (c) is from 1:0.5 to 1:200.

(36) The herbicidal composition according to (1), wherein (c) is bicyclopyrone or its salt, the weight ratio of (a) to (b) is from 1:2 to 1:200, and the weight ratio of (a) to (c) is from 1:0.25 to 1:40.

(37) The herbicidal composition according to (1), wherein (c) is mesotrione or its salt, the weight ratio of (a) to (b) is from 1:2 to 1:200, and the weight ratio of (a) to (c) is from 1:0.25 to 1:12.

(38) The herbicidal composition according to (1), wherein (c) is topramezone or its salt, the weight ratio of (a) to (b) is from 1:2 to 1:200, and the weight ratio of (a) to (c) is from 1:0.1 to 1:10.

(39) The herbicidal composition according to (1), wherein (c) is dimethenamid-P or its salt, the weight ratio of (a) to (b) is from 1:2 to 1:200, and the weight ratio of (a) to (c) is from 1:2 to 1:200.

(40) The herbicidal composition according to (1), wherein (c) is flufenacet or its salt, the weight ratio of (a) to (b) is from 1:3 to 1:50, and the weight ratio of (a) to (c) is from 1:3 to 1:30.

EXAMPLES

Now, the present invention will be described in further detail with reference to Examples. However, the present invention is by no means restricted to such specific Examples.

TEST EXAMPLE 1

Upland field soil was put into a 1/300,000 ha pot, and seeds of common cocklebur (Xanthium strumarium L.) were sown. When the common cocklebur reached 4.3 to 4.8-leaf stage, predetermined amounts of SC formulation containing nicosulfuron as an active ingredient (tradename: ONEHOPE NYUZAI, manufactured by Ishihara Sangyo Kaisha, Ltd.), SC formulation containing terbuthylazine as an active ingredient (tradename: Click, manufactured by BASF) and EC formulation containing dimethenamid-P as an active ingredient (tradename: Spectrum, manufactured by BASF) were diluted with water (in an amount corresponding to 1,000 L/ha) and applied for foliar treatment by a small sprayer.

On the 22nd day after treatment, the state of growth of the common cocklebur was visually observed to determine the growth inhibition rate (%) in accordance with the following evalution standard. The growth inhibition rate (%) (measured value) and the growth inhibition rate (%) (calculated value) calculated by the Colby's formula are shown in Table 1.

Growth inhibition rate (%) =

0 (equivalent to the non-treated area) to 100 (complete kill)

[Table 1]

| Compound | Dose (g/ha) | Growth inhibition rate (%) of common cocklebur | |
| --- | --- | --- | --- |
| | | Measured value | Calculated value |
| Nicosulfuron | 30 | 0 | - |
| Terbuthylazine | 500 | 10 | - |
| Dimethenamid-P | 1000 | 0 | - |
| Nicosulfuron + Terbuthylazine + Dimethenamid-P | 30+500+1000 | 50 | 10 |

## TEST EXAMPLE 2

Upland field soil was put into a 1/500,000 ha pot, and seeds of wild oat (Avena fatua L.) were sown. On the next day, predetermined amounts of ONEHOPE NYUZAI (tradename), Click (tradename) and SC formulation containing mesotrione as an active ingredient (tradename: Callisto, manufactured by Syngenta) were diluted with water (in an amount corresponding to 1,000 L/ha) and applied for soil treatment by a small sprayer.

On the 28th day after treatment, the state of growth of the wild oat was visually observed to determine the growth inhibition rate (%). The growth inhibition rate (%) (measured value) and the growth inhibition rate (%) calculated in the same manner as in the above Test Example 1 are shown in Table 2.

[Table 2]

| Compound | Dose (g/ha) | Growth inhibition rate (%) of wild oat | |
| --- | --- | --- | --- |
| | | Measured value | Calculated value |
| Nicosulfuron | 30 | 70 | - |
| Terbuthylazine | 500 | 60 | - |
| Mesotrione | 50 | 0 | - |
| Nicosulfuron + Terbuthylazine + Mesotrione | 30+500+50 | 98 | 88 |

## TEST EXAMPLE 3

Upland field soil was put into a 1/1,000,000 ha pot, and seeds of green foxtail (Setaria viridis (L.) P.Beauv.) were sown. On the next day, predetermined amounts of ONEHOPE NYUZAI (tradename), Click (tradename) and SC formulation containing sulcotrione as an active ingredient (tradename: Mikado, manufactured by Bayer CropScience) were diluted with water (in an amount corresponding to 1,000 L/ha) and applied for soil treatment by a small sprayer.

On the 27th day after treatment, the state of growth of the green foxtail was visually observed to determine the growth inhibition rate (%). The growth inhibition rate (%) (measured value) and the growth inhibition rate (%) calculated in the same manner as in the above Test Example 1 are shown in Table 3.

[Table 3]

| Compound | Dose (g/ha) | Growth inhibition rate (%) of green foxtail | |
| --- | --- | --- | --- |
| | | Measured value | Calculated value |
| Nicosulfuron | 30 | 60 | - |
| Terbuthylazine | 500 | 18 | - |
| Sulcotrione | 300 | 5 | - |
| Nicosulfuron + Terbuthylazine + Sulcotrione | 30+500+300 | 76 | 69 |

## TEST EXAMPLE 4

Upland field soil was put into a 1/1,000,000 ha pot, and seeds of wild oat (Avena fatua L.) were sown. On the next day, predetermined amounts of ONEHOPE NYUZAI (tradename), Click (tradename) and a wettable powder containing bicyclopyrone prepared in accordance with a conventional formulation method were diluted with water (in an amount corresponding to 1,000 L/ha) and applied for soil treatment by a small sprayer.

On the 28th day after treatment, the state of growth of the wild oat was visually observed to determine the growth inhibition rate (%). The growth inhibition rate (%) (measured value) and the growth inhibition rate (%) calculated in the same manner as in the above Test Example 1 are shown in Table 4.

[Table 4]

| Compound | Dose (g/ha) | Growth inhibition rate (%) of wild oat | |
| --- | --- | --- | --- |
| | | Measured value | Calculated value |
| Nicosulfuron | 30 | 30 | - |

(continued)

| Compound | Dose (g/ha) | Growth inhibition rate (%) of wild oat | |
|---|---|---|---|
| | | Measured value | Calculated value |
| Terbuthylazine | 500 | 15 | - |
| Bicyclopyrone | 100 | 25 | - |
| Nicosulfuron + Terbuthylazine + Bicyclopyrone | 30+500+100 | 100 | 55 |

TEST EXAMPLE 5

Upland field soil was put into a 1/300,000 ha pot, and seeds of Japanese millet (Echinochloa utilis Ohwi et Yabuno) were sown. On the next day, predetermined amounts of ONEHOPE NYUZAI (tradename), Click (tradename) and SC formulation containing topramezone as an active ingredient (tradename: Clio, manufactured by BASF) were diluted with water (in an amount corresponding to 1,000 L/ha) and applied for soil treatment by a small sprayer.
On the 28th day after treatment, the state of growth of the Japanese millet was visually observed to determine the growth inhibition rate (%). The growth inhibition rate (%) (measured value) and the growth inhibition rate (%) calculated in the same manner as in the above Test Example 1 are shown in Table 5.

[Table 5]

| Compound | Dose (g/ha) | Growth inhibition rate (%) of Japanese millet | |
|---|---|---|---|
| | | Measured value | Calculated value |
| Nicosulfuron | 30 | 40 | - |
| Terbuthylazine | 500 | 50 | - |
| Topramezone | 40 | 30 | - |
| Nicosulfuron + Terbuthylazine + Topramezone | 30+500+40 | 100 | 79 |

TEST EXAMPLE 6

Upland field soil was put into a 1/300,000 ha pot, and seeds of korean lespedeza (Kummerowia stipulacea (Maxim.) Makino) were sown. On the next day, predetermined amounts of ONEHOPE NYUZAI (tradename), Click (tradename), Mikado (tradename) and a wettable powder containing bicyclopyrone prepared in accordance with a conventional formulation method were diluted with water (in an amount corresponding to 1,000 L/ha) and applied for soil treatment by a small sprayer.
On the 14th day after treatment, the state of growth of the korean lespedeza was visually observed to determine the growth inhibition rate (%). The growth inhibition rate (%) (measured value) and the growth inhibition rate (%) calculated in the same manner as in the above Test Example 1 are shown in Table 6.

[Table 6]

| Compound | Dose (g/ha) | Growth inhibition rate (%) of korean lespedeza | |
|---|---|---|---|
| | | Measured value | Calculated value |
| Nicosulfuron | 10 | 0 | - |
| | 100 | 0 | - |
| Terbuthylazine | 200 | 10 | - |
| | 2000 | 25 | - |
| Sulcotrione | 1000 | 15 | - |
| Bicyclopyrone | 400 | 15 | - |
| Nicosulfuron + Terbuthylazine + Sulcotrione | 10+2000+1000 | 60 | 36 |
| | 100+200+1000 | 60 | 24 |

(continued)

| Compound | Dose (g/ha) | Growth inhibition rate (%) of korean lespedeza | |
| --- | --- | --- | --- |
| | | Measured value | Calculated value |
| Nicosulfuron + Terbuthylazine + Bicyclopyrone | 10+2000+400 | 50 | 36 |
| | 100+200+400 | 40 | 24 |

TEST EXAMPLE 7

Upland field soil was put into a 1/300,000 ha pot, and seeds of sunn-hemp (Crotalaria juncea L.) were sown. On the next day, predetermined amounts of ONEHOPE NYUZAI (tradename), Click (tradename), Mikado (tradename) and a wettable powder containing bicyclopyrone prepared in accordance with a conventional formulation method were diluted with water (in an amount corresponding to 1,000 L/ha) and applied for soil treatment by a small sprayer.
On the 28th day after treatment, the state of growth of the sunn-hemp was visually observed to determine the growth inhibition rate (%). The growth inhibition rate (%) (measured value) and the growth inhibition rate (%) calculated in the same manner as in the above Test Example 1 are shown in Table 7.

[Table 7]

| Compound | Dose (g/ha) | Growth inhibition rate (%) of sunn-hemp | |
| --- | --- | --- | --- |
| | | Measured value | Calculated value |
| Nicosulfuron | 100 | 40 | - |
| Terbuthylazine | 200 | 30 | - |
| Sulcotrione | 50 | 10 | - |
| Bicyclopyrone | 25 | 20 | - |
| Nicosulfuron + Terbuthylazine + Sulcotrione | 100+200+50 | 93 | 62 |
| Nicosulfuron + Terbuthylazine + Bicyclopyrone | 100+200+25 | 93 | 66 |

TEST EXAMPLE 8

Upland field soil was put into a 1/300,000 ha pot, and seeds of rostrate sesbania (Sesbania rostrata Bremek. & Oberm.) were sown. On the next day, predetermined amounts of ONEHOPE NYUZAI (tradename), Click (tradename), Spectrum (tradename) and Clio (tradename) were diluted with water (in an amount corresponding to 1,000 L/ha) and applied for soil treatment by a small sprayer.
On the 28th day after treatment, the state of growth of the rostrate sesbania was visually observed to determine the growth inhibition rate (%). The growth inhibition rate (%) (measured value) and the growth inhibition rate (%) calculated in the same manner as in the above Test Example 1 are shown in Table 8.

[Table 8]

| Compound | Dose (g/ha) | Growth inhibition rate (%) of rostrate sesbania | |
| --- | --- | --- | --- |
| | | Measured value | Calculated value |
| Nicosulfuron | 10 | 0 | - |
| Terbuthylazine | 2000 | 0 | - |
| Dimethenamid-P | 2000 | 40 | - |
| Topramezone | 100 | 80 | - |
| Nicosulfuron + Terbuthylazine + Dimethenamid-P | 10+2000+2000 | 100 | 40 |
| Nicosulfuron + Terbuthylazine + Topramezone | 10+2000+100 | 88 | 80 |

TEST EXAMPLE 9

Upland field soil was put into a 1/300,000 ha pot, and seeds of Japanese millet (Echinochloa utilis Ohwi et Yabuno) were sown. On the next day, predetermined amounts of ONEHOPE NYUZAI (tradename), Click (tradename), Mikado (tradename) and a wettable powder containing bicyclopyrone prepared in accordance with a conventional formulation method were diluted with water (in an amount corresponding to 1,000 L/ha) and applied for soil treatment by a small sprayer.

On the 28th day after treatment, the state of growth of the Japanese millet was visually observed to determine the growth inhibition rate (%). The growth inhibition rate (%) (measured value) and the growth inhibition rate (%) calculated in the same manner as in the above Test Example 1 are shown in Table 9.

[Table 9]

| Compound | Dose (g/ha) | Growth inhibition rate (%) of Japanese millet | |
| --- | --- | --- | --- |
| | | Measured value | Calculated value |
| Nicosulfuron | 10 | 0 | - |
| Terbuthylazine | 2000 | 65 | - |
| Sulcotrione | 50 | 20 | - |
| Bicyclopyrone | 25 | 83 | - |
| Nicosulfuron + Terbuthylazine + Sulcotrione | 10+2000+50 | 98 | 72 |
| Nicosulfuron + Terbuthylazine + Bicyclopyrone | 10+2000+25 | 100 | 94 |

TEST EXAMPLE 10

Upland field soil was put into a 1/300,000 ha pot, and seeds of prickly sida (Sida spinosa L.) were sown. On the next day, predetermined amounts of ONEHOPE NYUZAI (tradename), Click (tradename), Spectrum (tradename), Callisto (tradename) and Clio (tradename) were diluted with water (in an amount corresponding to 1,000 L/ha) and applied for soil treatment by a small sprayer.

On the 28th day after treatment, the state of growth of the prickly sida was visually observed to determine the growth inhibition rate (%). The growth inhibition rate (%) (measured value) and the growth inhibition rate (%) calculated in the same manner as in the above Test Example 1 are shown in Table 10.

[Table 10]

| Compound | Dose (g/ha) | Growth inhibition rate (%) of prickly sida | |
| --- | --- | --- | --- |
| | | Measured value | Calculated value |
| Nicosulfuron | 10 | 20 | - |
| | 100 | 40 | - |
| Terbuthylazine | 200 | 30 | - |
| | 2000 | 80 | - |
| Dimethenamid-P | 200 | 0 | - |
| Mesotrione | 25 | 25 | - |
| Topramezone | 10 | 0 | - |
| Nicosulfuron + Terbuthylazine + Dimethenamid-P | 10+2000+200 | 100 | 84 |
| | 100+200+200 | 75 | 58 |
| Nicosulfuron + Terbuthylazine + Mesotrione | 10+2000+25 | 99 | 88 |
| | 100+200+25 | 80 | 69 |
| Nicosulfuron + Terbuthylazine + Topramezone | 10+2000+10 | 100 | 84 |
| | 100+200+10 | 75 | 58 |

TEST EXAMPLE 11

Upland field soil was put into a 1/300,000 ha pot, and seeds of annual ragweed (Ambrosia artemisiifolia L.) were sown. On the next day, predetermined amounts of ONEHOPE NYUZAI (tradename), Click (tradename), Mikado (tradename) and a wettable powder containing bicyclopyrone prepared in accordance with a conventional formulation method were diluted with water (in an amount corresponding to 1,000 L/ha) and applied for soil treatment by a small sprayer.

On the 28th day after treatment, the state of growth of the annual ragweed was visually observed to determine the growth inhibition rate (%). The growth inhibition rate (%) (measured value) and the growth inhibition rate (%) calculated in the same manner as in the above Test Example 1 are shown in Table 11.

[Table 11]

| Compound | Dose (g/ha) | Growth inhibition rate (%) of annual ragweed | |
|---|---|---|---|
| | | Measured value | Calculated value |
| Nicosulfuron | 100 | 0 | - |
| Terbuthylazine | 200 | 20 | - |
| Sulcotrione | 2000 | 85 | - |
| Bicyclopyrone | 100 | 88 | - |
| Nicosulfuron + Terbuthylazine + Sulcotrione | 100+200+2000 | 98 | 88 |
| Nicosulfuron + Terbuthylazine + Bicyclopyrone | 100+200+100 | 98 | 90 |

TEST EXAMPLE 12

Upland field soil was put into a 1/1,000,000 ha pot, and seeds of common cocklebur (Xanthium strumarium L.) were sown. When the common cocklebur reached 4.2 to 4.3-leaf stage, predetermined amounts of ONEHOPE NYUZAI (tradename), Click (tradename) and water dispersible granules containing flufenacet as an active ingredient (tradename: Cadou, manufactured by Bayer CropScience) were diluted with water (in an amount corresponding to 1,000 L/ha) and applied for foliar treatment by a small sprayer.

On the 28th day after treatment, the state of growth of the common cocklebur was visually observed to determine the growth inhibition rate (%). The growth inhibition rate (%) (measured value) and the growth inhibition rate (%) calculated in the same manner as in the above Test Example 1 are shown in Table 12.

[Table 12]

| Compound | Dose (g/ha) | Growth inhibition rate (%) of common cocklebur | |
|---|---|---|---|
| | | Measured value | Calculated value |
| Nicosulfuron | 15 | 80 | - |
| Terbuthylazine | 250 | 30 | - |
| Flufenacet | 250 | 0 | - |
| Nicosulfuron + Terbuthylazine + Flufenacet | 15+250+250 | 93 | 86 |

TEST EXAMPLE 13

Upland field soil was put into a 1/1,000,000 ha pot, and seeds of Japanese millet (Echinochloa utilis Ohwi et Yabuno) were sown. When the Japanese millet reached 3.8 to 4.0-leaf stage, seeds of Japanese millet were further sown in the same pot. On the next day, predetermined amounts of ONEHOPE NYUZAI (tradename), Click (tradename) and a wettable powder containing bicyclopyrone prepared in accordance with a conventional formulation method were diluted with water (in an amount corresponding to 1,000 L/ha) and applied for soil treatment and for foliar treatment by a small sprayer.

On the 28th day after treatment, the state of growth of the Japanese millet was visually observed to determine the growth inhibition rate (%). The growth inhibition rate (%) (measured value) and the growth inhibition rate (%) calculated in the same manner as in the above Test Example 1 are shown in Table 13.

[Table 13]

| Compound | Dose (g/ha) | Growth inhibition rate (%) of Japanese millet | |
|---|---|---|---|
| | | Measured value | Calculated value |
| Nicosulfuron | 15 | 55 | - |
| Terbuthylazine | 250 | 0 | - |
| Bicyclopyrone | 100 | 78 | - |
| Nicosulfuron + Terbuthylazine + Bicyclopyrone | 15+250+100 | 100 | 90 |

TEST EXAMPLE 14

Upland field soil was put into a 1/1,000,000 ha pot, and seeds of velvetleaf (Abutilon theophrasti Medic.) were sown. When the velvetleaf reached 4.0 to 4.3-leaf stage, seeds of velvetleaf were further sown in the same pot assuming conditions such that weeds would later grow. On the next day, predetermined amounts of ONEHOPE NYUZAI (tradename), Click (tradename), Callisto (tradename), Mikado (tradename), a wettable powder containing bicyclopyrone as an active ingredient and Clio (tradename) were diluted with water in an amount corresponding to 300 L/ha and applied for soil treatment and for foliar treatment by a small sprayer.

On the 31 st day after treatment, the state of growth of the velvetleaf was visually observed to determine the growth inhibition rate (%). The growth inhibition rate (%) (measured value) and the growth inhibition rate (%) calculated in the same manner as in the above Test Example 1 are shown in Table 14.

[Table 14]

| Compound | Dose (g/ha) | Growth inhibition rate (%) of velvetleaf | |
|---|---|---|---|
| | | Measured value | Calculated value |
| Nicosulfuron | 20 | 3 | - |
| | 60 | 11 | - |
| Terbuthylazine | 400 | 0 | - |
| | 1200 | 0 | - |
| Mesotrione | 50 | 91 | - |
| | 120 | 93 | - |
| Sulcotrione | 100 | 88 | - |
| | 300 | 90 | - |
| Bicyclopyrone | 50 | 88 | - |
| | 150 | 93 | - |
| Topramezone | 10 | 8 | - |
| | 60 | 65 | - |
| Nicosulfuron + Terbuthylazine + Mesotrione | 20+1200+120 | 100 | 93 |
| | 60+400+50 | 100 | 92 |
| Nicosulfuron + Terbuthylazine + Sulcotrione | 20+1200+300 | 100 | 90 |
| | 60+400+100 | 99 | 89 |
| Nicosulfuron + Terbuthylazine + Bicyclopyrone | 20+1200+150 | 100 | 93 |
| | 60+400+50 | 97 | 89 |
| Nicosulfuron + Terbuthylazine + Topramezone | 20+1200+60 | 95 | 65 |
| | 60+400+10 | 63 | 18 |

As evident from the results in Test Example 14, by combined use of nicosulfuron and terbuthylazine further with mesotrione, sulcotrione, bicyclopyrone or topramezone, a synergistic effect was obtained as compared with a case where the respective compounds were applied individually, and a composition excellent in the long lasting residual activity having high foliar treatment activity and high soil treatment activity even under conditions such that weeds would later grow, was obtained.

TEST EXAMPLE 15

Upland field soil was put into a 1/1,000,000 ha pot, and seeds of guinea grass (Panicum maximum Jacq.) were sown. When the guinea grass reached 5.2 to 6.0-leaf stage, seeds of guinea grass were further sown in the same pot assuming conditions such that weeds would later grow. On the next day, predetermined amounts of ONEHOPE NYUZAI (tradename), Click (tradename), Spectrum (tradename) and Cadou (tradename) were diluted with water in an amount corresponding to 300 L/ha and applied for soil treatment and for foliar treatment by a small sprayer.

On the 31 st day after treatment, the state of growth of the guinea grass was visually observed to determine the growth inhibition rate (%). The growth inhibition rate (%) (measured value) and the growth inhibition rate (%) calculated in the same manner as in the above Test Example 1 are shown in Table 15.

[Table 15]

| Compound | Dose (g/ha) | Growth inhibition rate (%) of guinea grass | |
| --- | --- | --- | --- |
| | | Measured value | Calculated value |
| Nicosulfuron | 20 | 46 | - |
| | 60 | 83 | - |
| Terbuthylazine | 400 | 5 | - |
| | 1200 | 23 | - |
| Dimethenamid-P | 500 | 57 | - |
| | 1000 | 60 | - |
| Flufenacet | 250 | 50 | - |
| Nicosulfuron + Terbuthylazine + Dimethenamid-P | 20+1200+1000 | 98 | 83 |
| | 60+400+500 | 100 | 93 |
| Nicosulfuron + Terbuthylazine + Flufenacet | 60+400+250 | 100 | 92 |

As evident from the results in Test Example 15, by combined use of nicosulfuron and terbuthylazine further with dimethenamid-P or flufenacet, a synergistic effect was obtained as compared with a case where the respective compounds were applied individually, and a composition excellent in the long lasting residual activity having high foliar treatment activity and high soil treatment activity even under conditions such that weeds would later grow, was obtained.

TEST EXAMPLE 16

Upland field soil was put into a 1/1,000,000 ha pot, and seeds of velvetleaf (Abutilon theophrasti Medic.) were sown. When the velvetleaf reached 4.0 to 4.3-leaf stage, seeds of velvetleaf were further sown in the same pot assuming conditions such that weeds would later grow. Three days later, predetermined amounts of ONEHOPE NYUZAI (tradename), Click (tradename), Callisto (tradename), Mikado (tradename), a wettable powder containing bicyclopyrone as an active ingredient and Clio (tradename) were diluted with water in an amount corresponding to 300 L/ha and applied for soil treatment and for foliar treatment by a small sprayer.

On the 29th day after treatment, the state of growth of the velvetleaf was visually observed to determine the growth inhibition rate (%). The growth inhibition rate (%) (measured value) and the growth inhibition rate (%) calculated in the same manner as in the above Test Example 1 are shown in Table 16.

[Table 16]

| Compound | Dose (g/ha) | Growth inhibition rate (%) of velvetleaf | |
|---|---|---|---|
| | | Measured value | Calculated value |
| Nicosulfuron | 30 | 0 | - |
| Terbuthylazine | 500 | 15 | - |
| | 1000 | 18 | - |
| Mesotrione | 75 | 89 | - |
| Sulcotrione | 200 | 88 | - |
| Bicyclopyrone | 75 | 89 | - |
| Topramezone | 20 | 50 | - |
| Nicosulfuron + Terbuthylazine | 30+500 | 25 | - |
| | 30+1000 | 30 | - |
| Nicosulfuron + Terbuthylazine + Mesotrione | 30+500+75 | 100 | 91 |
| | 30+1000+75 | 100 | 91 |
| Nicosulfuron + Terbuthylazine + Sulcotrione | 30+500+200 | 100 | 89 |
| | 30+1000+200 | 100 | 90 |
| Nicosulfuron + Terbuthylazine + Bicyclopyrone | 30+500+75 | 100 | 91 |
| | 30+1000+75 | 100 | 91 |
| Nicosulfuron + Terbuthylazine + Topramezone | 30+500+20 | 80 | 58 |
| | 30+1000+20 | 88 | 59 |

As evident from the results in Test Example 16, by combined use of nicosulfuron and terbuthylazine further with mesotrione, sulcotrione, bicyclopyrone or topramezone, excellent herbicidal activity was shown as compared with a case where the respective compounds were applied individually or a case where two compounds of nicosulfuron and terbuthylazine were used in combination, and a composition excellent in the long lasting residual activity having high foliar treatment activity and high soil treatment activity even under conditions such that weeds would later grow, was obtained.

TEST EXAMPLE 17

Upland field soil was put into a 1/1,000,000 ha pot, and seeds of guinea grass (Panicum maximum Jacq.) were sown. When the guinea grass reached 5.2 to 6.0-leaf stage, seeds of guinea grass were further sown in the same pot assuming conditions such that weeds would later grow. Three days later, predetermined amounts of ONEHOPE NYUZAI (tradename), Click (tradename) and Spectrum (tradename) were diluted with water in an amount corresponding to 300 L/ha and applied for soil treatment and for foliar treatment by a small sprayer.

On the 29th day after treatment, the state of growth of the guinea grass was visually observed to determine the growth inhibition rate (%). The growth inhibition rate (%) (measured value) and the growth inhibition rate (%) calculated in the same manner as in the above Test Example 1 are shown in Table 17.

[Table 17]

| Compound | Dose (g/ha) | Growth inhibition rate (%) of guinea grass | |
|---|---|---|---|
| | | Measured value | Calculated value |
| Nicosulfuron | 30 | 38 | - |
| Terbuthylazine | 500 | 0 | - |
| Dimethenamid-P | 1000 | 55 | - |
| Nicosulfuron + Terbuthylazine | 30+500 | 62 | - |

17

(continued)

| Compound | Dose (g/ha) | Growth inhibition rate (%) of guinea grass | |
| --- | --- | --- | --- |
| | | Measured value | Calculated value |
| Nicosulfuron + Terbuthylazine + Dimethenamid-P | 30+500+1000 | 99 | 72 |

As evident from the results in Test Example 17, by combined use of nicosulfuron and terbuthylazine further with dimethenamid-P, excellent herbicidal activity was shown as compared with a case where the respective compounds were applied individually or a case where two compounds of nicosulfuron and terbuthylazine were used in combination, and a composition excellent in the long lasting residual activity having high foliar treatment activity and high soil treatment activity even under conditions such that weeds would later grow, was obtained.

INDUSTRIAL APPLICABILITY

The herbicidal composition of the present invention has a broad herbicidal spectrum, has high activity and has a long lasting effect, and broadening of the herbicidal spectrum particularly against gramineae and application to genetically-modified crops resistant to ALS inhibitors, etc. are possible, and an increase in the application site can be expected.
Further, the present invention can meet requirements by practical users that "development of resistance is to be delayed by use of active ingredients differing in the mechanism in combination", against weeds which have acquired resistance due to repeated application of a specific herbicide, and the present invention is highly industrially applicable.
The entire disclosure of Japanese Patent Application No. 2012-079935 filed on March 30, 2012 including specification, claims and summary is incorporated herein by reference in its entirety.

**Claims**

1.  A herbicidal composition comprising, as active ingredients, (a) nicosulfuron or its salt, (b) terbuthylazine or its salt and (c) compound C (compound C is at least one herbicidal compound selected from the group consisting of group C1 and group C2 or its salt; Group C1 is at least one 4-hydroxyphenylpyruvate dioxygenase inhibitor selected from the group consisting of sulcotrione, bicyclopyrone, mesotrione, topramezone and their salts; and group C2 is at least one very long chain fatty acid biosynthesis inhibitor selected from the group consisting of dimethenamid-P, flufenacet and their salts).

2.  The herbicidal composition according to Claim 1, wherein the mixing ratio of (a) to (b) is from 1:0.5 to 1:800 by the weight ratio, and the mixing ratio of (a) to (c) is from 1:0.03 to 1:800 by the weight ratio.

3.  The herbicidal composition according to Claim 1, wherein (c) is at least one 4-hydroxyphenylpyruvate dioxygenase inhibitor selected from the group consisting of sulcotrione, bicyclopyrone, mesotrione, topramezone and their salts.

4.  The herbicidal composition according to Claim 1, wherein (c) is at least one very long chain fatty acid biosynthesis inhibitor selected from the group consisting of dimethenamid-P, flufenacet and their salts.

5.  The herbicidal composition according to Claim 1, wherein (c) is at least one member selected from the group consisting of sulcotrione, bicyclopyrone, topramezone, dimethenamid-P and their salts.

6.  The herbicidal composition according to Claim 1, wherein (c) is at least one member selected from the group consisting of sulcotrione, bicyclopyrone, dimethenamid-P and their salts.

7.  A method for controlling undesired plants or inhibiting their growth, which comprises applying a herbicidally effective amount of the herbicidal composition as defined in Claim 1 to the undesired plants or to a place where they grow.

8.  A method for controlling undesired plants or inhibiting their growth, which comprises applying a herbicidally effective amount of (a) nicosulfuron or its salt, a herbicidally effective amount of (b) terbuthylazine or its salt, and a herbicidally effective amount of (c) compound C (compound C is at least one herbicidal compound selected from the group consisting of group C1 and group C2 or its salt; Group C1 is at least one 4-hydroxyphenylpyruvate dioxygenase inhibitor selected from the group consisting of sulcotrione, bicyclopyrone, mesotrione, topramezone and their salts;

and group C2 is at least one very long chain fatty acid biosynthesis inhibitor selected from the group consisting of dimethenamid-P, flufenacet and their salts), to the undesired plants or to a place where they grow.

9. The method according to Claim 8, wherein (a) is applied in an amount of from 5 to 150 g/ha, (b) is applied in an amount of from 100 to 4,000 g/ha, and (c) is applied in an amount of from 5 to 4,000 g/ha.

10. The method according to Claim 8, wherein (a) is applied in an amount of from 10 to 100 g/ha, (b) is applied in an amount of from 200 to 2,000 g/ha, and (c) is applied in an amount of from 10 to 2,000 g/ha.

11. The method according to Claim 8, wherein the undesired plants are weeds having lowered sensitivity to herbicidal compounds.

<table>
<tr><td colspan="2" align="center">**INTERNATIONAL SEARCH REPORT**</td><td>International application No.<br>PCT/JP2013/059673</td></tr>
</table>

**A. CLASSIFICATION OF SUBJECT MATTER**

*A01N47/36*(2006.01)i, *A01N41/10*(2006.01)i, *A01N43/10*(2006.01)i, *A01N43/40* (2006.01)i, *A01N43/70*(2006.01)i, *A01N43/80*(2006.01)i, *A01N43/824* (2006.01)i, *A01P13/00*(2006.01)i

According to International Patent Classification (IPC) or to both national classification and IPC

**B. FIELDS SEARCHED**

Minimum documentation searched (classification system followed by classification symbols)

A01N47/36, A01N41/10, A01N43/10, A01N43/40, A01N43/70, A01N43/80, A01N43/824, A01P13/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

CAplus(STN), REGISTRY(STN), JSTPlus(JDreamII), JST7580(JDreamII), JSTChina

**C. DOCUMENTS CONSIDERED TO BE RELEVANT**

| Category* | Citation of document, with indication, where appropriate, of the relevant passages | Relevant to claim No. |
|---|---|---|
| A | JP 2007-291055 A (Ishihara Sangyo Kaisha, Ltd.),<br>08 November 2007 (08.11.2007),<br>claims 1, 2; paragraphs [0005], [0016], [0021], [0025]<br>& US 2009/0264292 A1 & WO 2007/037152 A1<br>& KR 10-2008-0049787 A & CN 101272687 A | 1-11 |
| A | JP 2004-534789 A (Syngenta Participations AG.),<br>18 November 2004 (18.11.2004),<br>claims 1, 2, 5, 12, 13<br>& US 2004/0167033 A1 & WO 2002/100171 A1<br>& CN 1527666 A | 1-11 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 April, 2013 (15.04.13) | Date of mailing of the international search report<br>23 April, 2013 (23.04.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/059673

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2004-99602 A  (Syngenta Participations AG.), 02 April 2004 (02.04.2004), claim 1; paragraph [0016] & US 2004/0033897 A1　　& US 2007/0142228 A1 & EP 1388285 A2　　　& EP 1652432 A2 & EP 1842426 A2　　　& CN 1494827 A | 1-11 |
| A | JP 2009-517365 A  (BASF SE), 30 April 2009 (30.04.2009), claims 1, 7; paragraphs [0082] to [0093]; examples & US 2007/0123426 A1　　& US 2008/0293572 A1 & WO 2007/060146 A2 | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007037152 A
- WO 2004008849 A

- JP 2012079935 A

**Non-patent literature cited in the description**

- **COLBY S.R.** *Weed,* 1967, vol. 15, 20-22